# EUROPÄISCHE PATENTSCHRIFT

(11) **EP 3 033 557 B1**
(45) Veröffentlichungstag und Bekanntmachung des Hinweises auf die Patenterteilung: **11.10.2017**
(21) Anmeldenummer: 15704212.8
(22) Anmeldetag: 06.02.2015
(51) Int. Cl.: F16K 31/122, F16K 7/17, F16K 27/02

(54) **VENTIL**
VALVE
SOUPAPE

(30) Priorität: 31.03.2014 DE 102014004670
(43) Veröffentlichungstag der Anmeldung: 22.06.2016
(73) Patentinhaber: Festo AG & Co. KG, 73734 Esslingen (DE)
(72) Erfinder: HOTZ, Jasmin, 73669 Lichtenwald (DE); GELBMANN, André, 73272 Neidlingen (DE); KANTHACK, Michael, 71299 Wimsheim (DE)
(74) Vertreter: Patentanwälte Magenbauer & Kollegen Partnerschaft mbB
(86) Internationale Anmeldenummer: PCT/EP2015/000243
(87) Internationale Veröffentlichungsnummer: WO 2015/149897

(56) Entgegenhaltungen:
- DE-B- 1 267 923
- DE-U1- 8 601 674
- US-A- 2 693 822
- US-A- 4 309 022

## Beschreibung

Die Erfindung betrifft ein Ventil, mit einem von Prozessmedium durchströmbaren Ventilgehäuse, in dem ein eine Durchströmöffnung umgebender Ventilsitz angeordnet ist, dem ein an einer Spindel angeordnetes Ventilglied derart zugeordnet ist, dass das Ventilglied mittels eines Stellhubs der Spindel zwischen einer Absperrstellung, in der das Ventilglied prozessmediumdicht dichtend am Ventilsitz anliegt, und einer Offenstellung, in der das Ventilglied vom Ventilsitz abgehoben ist, bewegbar ist, wobei im Ventilgehäuse eine von der Spindel durchgriffene, den Spindeldurchgang abdichtende Dichtungseinrichtung aufgenommen ist, und mit einem Ventilantrieb, der ein Antriebsgehäuse und eine im Antriebsgehäuse beweglich angeordnete, mittels Fluiddruck beaufschlagbare und den Stellhub der Spindel erzeugende Arbeitswand aufweist, und wobei am Ventilgehäuse eine Ventilgehäuse-Schnittstelle und am Antriebsgehäuse eine Antriebsgehäuse-Schnittstelle zur Kopplung von Ventilgehäuse und Antriebsgehäuse angeordnet sind.

Ein Ventil dieser Art ist beispielsweise in der EP 0 897 076 B1 beschrieben. Das dort offenbarte Ventil ist als Membranventil ausgestaltet und besitzt ein Ventilglied in Form einer Membran, das über ein Druckstück mit der Spindel gekoppelt ist. Die Spindel wiederum ist über Verbindungsmittel mit einem Antriebsglied in Form eines Kolbens gekoppelt. Der Kolben ist in einem Antriebsgehäuse beweglich geführt. Das Antriebsgehäuse weist hierzu ein Gehäuseoberteil auf, das auf ein Zwischenstück geschraubt ist, das Bestandteil des Ventilgehäuses ist. Das Zwischenstück ist von der Spindel durchsetzt und seinerseits über Schrauben an ein Basisteil des Ventilgehäuses angeschraubt. Die Membran ist zwischen dem Zwischenstück und dem Basisteil des Ventilgehäuses eingespannt. Die mittels Druck beaufschlagbare Kolbenkammer des Kolbens wird also von der Innenwandung des Zwischenstücks und der Innenwandung des Gehäuseoberteils begrenzt.

DE1267923 offenbart ein Ventil nach dem Oberbegriff des Anspruchs 1.

Bei der Demontage des Antriebs wird das Gehäuseoberteil vom Zwischenstück abgeschraubt. Zusätzlich ist es notwendig, die Verbindung zwischen der Spindel und dem Kolben zu trennen. Eine andere Möglichkeit ist, Zwischenstück und Gehäuseoberteil gemeinsam vom restlichen Ventilgehäuse abzumontieren. Hierbei sind die Schrauben zwischen dem Basisteil des Ventilgehäuses und dem Zwischenstück zu lösen. Doch wird hiermit auch die Einspannung der Membran gelöst, sodass das verbleibende Ventilgehäuse-Basisteil nun ohne Membran ausgestattet und daher die Ventil-Durchströmöffnung auch nicht mehr absperrbar ist.
Aufgabe der Erfindung ist es, ein Ventil der eingangs erwähnten Art zu schaffen, das in einfacher Weise montierbar beziehungsweise demontierbar ist und das sich durch eine höhere Funktionalität gegenüber den aus dem Stand der Technik bekannten Ventilen auszeichnet.
Diese Aufgabe wird durch ein Ventil mit den Merkmalen des unabhängigen Anspruchs 1 gelöst. Weiterbildungen der Erfindung sind in den Unteransprüchen dargestellt.

Das erfindungsgemäße Ventil zeichnet sich dadurch aus, dass das Antriebsgehäuse einen der Arbeitswand vorgelagerten, einen Arbeitsraum für die Arbeitswand begrenzenden Gehäuseboden aufweist, an dem sich die Antriebsgehäuse-Schnittstelle befindet.

Das erfindungsgemäße Ventil ist in mehrere funktionelle Baugruppen unterteilt, die jede für sich funktionstüchtig sind. So lässt sich beispielsweise das Antriebsgehäuse in einfacher Weise durch Lösen der Schnittstellenverbindung an der Schnittstelle zwischen Antriebsgehäuse und Ventilgehäuse lösen. Die im Ventilgehäuse aufgenommene Dichtungseinrichtung sorgt dafür, dass das Ventilgehäuse auch bei abgenommenem Antrieb eine geschlossene Einheit bildet, die separat nutzbar ist. Insbesondere ist es dadurch möglich, das Ventilgehäuse beziehungsweise die Ventilarmatur ohne Antrieb in Prozessmediumleitungen einzubauen, was ohne den Antrieb sowohl aufgrund des leichteren Gewichts als auch durch die kleinere Baugröße einfacher möglich ist als wenn der Antrieb montiert wäre. Ferner lassen sich an dem Ventilgehäuse auch bei abmontiertem Antriebsgehäuse Druckprüfungen durchführen, wodurch also erst sämtliche fluidseitigen Arbeitsschritte abgeschlossen werden können, bevor der Ventilantrieb angebaut wird. Die in das Ventilgehäuse aufgenommene Dichtungseinrichtung dichtet also das Prozessmedium dicht ab, unabhängig davon, ob der Ventilantrieb angekoppelt ist oder nicht.

Grundsätzlich besteht das Ventil aus einem Ventilgehäuse bzw. einer Ventilarmatur und einem Ventilantrieb. Als Ventilantriebe können fluidische, elektrische, magnetische und manuelle, beispielsweise mittels Handrad betätigte Ventilantriebe eingesetzt werden. Als Ventilarmaturen kommen beispielsweise Schrägsitz-, Geradsitz- oder Membranventilarmaturen in Frage.

Es ist also möglich, dass das Ventil einen Ventilantriebs-Baustein und einen Ventilgehäuse-Baustein besitzt, die jeweils als vormontierbare Baugruppen ausgestaltet sein können und in einfacher und schneller Weise zusammengebaut oder voneinander getrennt werden können.
Bei einer Weiterbildung der Erfindung ist der Gehäuseboden von einer mit der Arbeitswand gekoppelten Arbeitsstange durchsetzt, und im Gehäuseboden sind Dichtungsmittel zur Abdichtung des Durchgangs der Arbeitsstange aufgenommen. Erfindungsgemäß weist der Gehäuseboden ein mit dem Rest des Antriebsgehäuses druckfest verbundenes und mit einer Innenwandung den Arbeitsraum begrenzendes Boden-Basisteil und ein mit dem Boden-Basisteil gekoppeltes, die Antriebsgehäuse-Schnittstelle aufweisendes antriebsseitiges Schnittstellenteil auf. Erfindungsgemäß ist das antriebsseitige Schnittstellenteil als ein vom Boden-Basisteil separates Bauteil ausgebildet und am Boden-Basisteil befestigt. Bei der Erfindung weist das Ventilgehäuse ein Ventilgehäuse-Basisteil und ein mit dem Ventilgehäuse-Basisteil gekoppeltes, die Ventilgehäuse-Schnittstelle aufweisendes fluidseitiges Schnittstellenteil auf. In bevorzugter Weise ist also die Ventilgehäuse-Schnittstelle am fluidseitigen Schnittstellenteil ausgebildet, während die korrespondierende Antriebsgehäuse-Schnittstelle am antriebsseitigen Schnittstellenteil angeordnet ist. Erfindungsgemäß ist das fluidseitige Schnittstellenteil ein vom Ventilgehäuse-Basisteil separates Bauteil und kann am Ventilgehäuse insbesondere lösbar befestigt werden. Das fluidseitige Schnittstellenteil ist vorzugsweise hohlzylindrisch ausgebildet. Durch diese lösbare Befestigung am Ventilgehäuse-Basisteil lässt sich das fluidseitige Schnittstellenteil bei Bedarf einfach und schnell austauschen. Insgesamt entsteht dadurch eine größere Modularität. Für die lösbare Verbindung mit dem Ventilgehäuse-Basisteil eignet sich beispielsweise eine Gewindeverbindung. Alternativ ist es möglich, dass das fluidseitige Schnittstellenteil und das Ventilgehäuse-Basisteil einteilig sind.

Bei einer Weiterbildung der Erfindung ist die Dichtungseinrichtung in das fluidseitige Schnittstellenteil aufgenommen.

Besonders eignet sich hierzu die Aufnahme der Dichtungseinrichtung in einer vom Ventilgehäuse gesonderten, als betriebsfertig vormontierte Baugruppe ausgebildeten und am Ventilgehäuse befestigten Dichtungspatrone.

Ventilgehäuse, Dichtungspatrone und angekoppelter Ventilantrieb sind also voneinander separat ausgebildete Baueinheiten, die in einfacher und schneller Weise zusammenmontiert oder demontiert werden können. Dadurch ist ein schneller und somit kostengünstiger Austausch von verschleißanfälligen Dichtungen möglich.

Zweckmäßigerweise weist die Dichtungspatrone ein Patronengehäuse auf, in dem eine mittels Federmitteln federnd gegenüber dem Patronengehäuse vorgespannte, unter Abdichtung an die Spindel anliegende, Dichtungsmittel umfassende Dichtungsanordnung aufgenommen ist.

Bei einer Weiterbildung der Erfindung sind Arbeitsstange und Spindel über eine weitere, innere Schnittstelle miteinander koppelbar oder gekoppelt. Zweckmäßigerweise ist diese weitere, innere Schnittstelle für den Fall, dass die Ventilgehäuse-Schnittstelle und die Antriebsgehäuse-Schnittstelle miteinander verbunden sind, in einer zur Umgebung geschlossenen Kammer angeordnet. Dadurch wird der Eintrag von Schmutz in den Bereich der inneren Schnittstelle verhindert.

Bei einer Weiterbildung der Erfindung ist die Arbeitswand als fluiddruckbeaufschlagbarer Arbeitskolben ausgebildet. Der Arbeitskolben ist zweckmäßigerweise Bestandteil eines fluidischen Linearantriebs. Als Alternative zum fluiddruckbeaufschlagbaren Arbeitskolben ist auch eine fluiddruckbeaufschlagbare Membran denkbar.

Es ist möglich, dass der Arbeitsraum als fluiddruckbeaufschlagbare Arbeitskammer ausgebildet ist. Alternativ wäre es jedoch auch denkbar, dass der Arbeitsraum lediglich zur Aufnahme von Federmitteln zur Beaufschlagung der Arbeitswand zur Verfügung steht und eine weitere, mit Fluiddruck beaufschlagbare Arbeitskammer vorgesehen ist.

In besonders bevorzugter Weise umfasst das Ventil ein an der Ventilgehäuse-Schnittstelle mit dem Ventilgehäuse anstelle des Antriebsgehäuses koppelbares Aufsatzteil, das die Spindel im aufgesetzten Zustand in deren Absperrstellung drückt. Dadurch ist es also möglich, dass das Ventil mit seinem Ventilglied in der Absperrstellung in eine Prozessmediumleitung eingebaut werden kann.

Bevorzugte Ausführungsbeispiele der Erfindung sind in der Zeichnung dargestellt und werden im Folgenden näher erläutert. In der Zeichnung zeigen:
- Figur 1: einen Längsschnitt durch ein erstes Ausführungsbeispiel des erfindungsgemäßen Ventils bei vom Ventilgehäuse getrenntem Ventilantrieb und
- Figur 2: einen Längsschnitt durch ein zweites Ausführungsbeispiel des erfindungsgemäßen Ventils ohne Ventilantrieb.

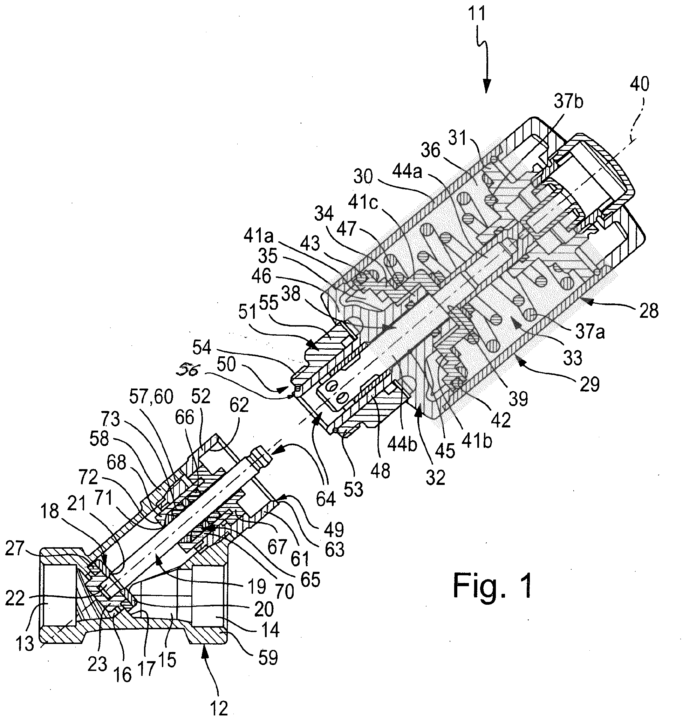

Die Figur 1 zeigt ein erstes Ausführungsbeispiel des erfindungsgemäßen Ventils 11. Das Ventil 11 ist dazu geeignet, als Prozessventil in der Prozessindustrie eingesetzt zu werden. Im Folgenden wird das erfindungsgemäße Ventil 11 gemäß dem ersten Ausführungsbeispiel beispielhaft anhand eines sogenannten Schrägsitz-Ventils erläutert. Die Erfindung lässt sich jedoch auch auf ein Geradsitz-Ventil anwenden.

Wie insbesondere in Figur 1 dargestellt, besitzt das Ventil 11 ein Ventilgehäuse 12, in dem sich zwischen einem Eingang 13 und einem Ausgang 14 ein Durchströmungskanal 15 erstreckt.

Im Falle einer Verwendung in der Lebensmittelindustrie besteht das Ventilgehäuse 12 zweckmäßigerweise aus Edelstahl. Werden als Prozessmedien aggressive Substanzen, beispielsweise Säure, eingesetzt, besteht das Ventilgehäuse 12 zweckmäßigerweise aus Kunststoffmaterial, das gegenüber derartigen Substanzen eine größere chemische Beständigkeit besitzt.

Im Durchströmungskanal 15 befindet sich zwischen dem Eingang 13 und dem Ausgang 14 eine Durchströmöffnung 16, die von einem ringförmigen Ventilsitz 17 umgeben ist. Zweckmäßigerweise ist der Ventilsitz 17 kreisförmig ausgestaltet. Theoretisch wäre jedoch auch eine ovale Form des Ventilsitzes 17 denkbar.

Dem Ventilsitz 17 ist ein Ventilglied 18 zugeordnet, das seinerseits an einer Spindel 19 angeordnet ist.

Das Ventilglied 18 ist rein beispielhaft mehrteilig gezeigt und besitzt in diesem Fall einen Teller 20, der mit einem Durchgangsloch versehen ist, durch das hindurch ein Endabschnitt 22 der Spindel hindurch steckbar ist. Der Teller 20 ist beispielsweise mit der Spindel 19 verschweißt. Zum Ventilglied 18 zählt ferner noch ein Gegenstück 23, das mit einer sacklochartigen Aufnahmeöffnung 24 versehen ist, die mit einem Innengewinde versehen ist. Komplementär dazu befindet sich am Endabschnitt 22 der Spindel 19 ein Außengewinde, womit sich das Gegenstück 23 auf den Endabschnitt 22 der Spindel 19 schrauben lässt. Zwischen dem Gegenstück 23 und dem Teller 20 ist ein ringförmiger Dichtring 27 eingespannt, der zweckmäßigerweise aus Kunststoffmaterial, beispielsweise PTFE, besteht.

Das Ventilglied 18 ist mittels eines Stellhubs der Spindel 19 zwischen einer Absperrstellung, in der das Ventilglied 18 mit seinem Dichtring 27 fluiddicht am Ventilsitz 17 anliegt, und einer Offenstellung, in der das Ventilglied 18 vom Ventilsitz 17 abgehoben ist, bewegbar. Der Stellhub der Spindel 19 wird durch einen Ventilantrieb 28 erzeugt.

Der Ventilantrieb 28 ist in Figur 1 beispielhaft anhand eines fluidischen Linearantriebs in Form eines pneumatischen Kolbenantriebs gezeigt. Der Ventilantrieb 28 besitzt ein Antriebsgehäuse 29. Das Antriebsgehäuse 29 ist eine in sich geschlossene, vormontierbare Baueinheit, mit einem hohlzylindrischen Gehäusekorpus 30, der oberseitig mit einem Gehäusedeckel 31 und unterseitig mit einem Gehäuseboden 32 fluiddicht verschlossen ist. Der Gehäusekorpus 30 kann aus Aluminium bestehen, beispielsweise als Aluminium-Strangpressteil ausgeführt sein. Gegebenenfalls kann der Aluminium-Gehäusekorpus 30 noch mit einer Edelstahlhülle verkleidet sein. Alternativ wäre es jedoch auch denkbar, den Gehäusekorpus 30 als Edelstahl-Teil auszubilden.

Der Gehäusedeckel 31, der Gehäuseboden 32 und der Gehäusekorpus 30 definieren einen Innenraum 33, in dem eine Arbeitswand 34 in Form eines fluiddruckbeaufschlagbaren Arbeitskolbens beweglich geführt ist und den Innenraum 33 in zwei Arbeitsräume 35, 36 beziehungsweise Arbeitskammern unterteilt. Im Beispielsfall ist ein einfach wirkender Kolbenantrieb dargestellt, bei dem einer der beiden Arbeitsräume 35 mittels Druckluft beaufschlagbar ist, während im anderen Arbeitsraum 36 wenigstens eine, im Beispielsfall zwei Rückstellfedern 37a, 37b angeordnet sind. Dabei ist die Anordnung so gewählt, dass die Rückstellfedern 37a, 37b den Antriebskolben zu dem ersten Arbeitsraum 35 nach unten drücken, wodurch die angekoppelte Spindel 19 und das damit verbundene Ventilglied 18 auf den Ventilsitz 17 gedrückt werden. Eine derartige Ausführung wird auch als Normally Closed bezeichnet. Wird der erste Arbeitsraum 35 mit Druckluft beaufschlagt, so wird der Antriebskolben entgegen der Rückstellkraft der Rückstellfedern 37a, 37b nach oben gedrückt, wodurch sich letztendlich das Ventilglied 18 vom Ventilsitz 17 abhebt.

Der Antriebskolben ist tellerförmig ausgebildet und ist fest mit einer als Kolbenstange ausgebildeten Arbeitsstange 38 verbunden, die über eine Durchgangsöffnung 39 durch den Antriebskolben hindurchragt. Der Antriebskolben ist im Beispielsfall in mehrere ringförmige, in Axialrichtung entlang einer durch Kolbenstange und Spindel 19 verlaufende Längsachse 40 hintereinandergestapelte Zylinderabschnitte 41a-c unterteilt, die sich untereinander in ihrem jeweiligen Außendurchmesser unterscheiden. Der erste Zylinderabschnitt 41a besitzt den größten Außendurchmesser und liegt mit seiner Mantelfläche an der Innenwandung des Gehäusekorpus 30 an. In der Mantelfläche des ersten Zylinderabschnitts 41a ist eine ringförmige Dichtnut 42 ausgebildet, in der ein insbesondere aus Kunststoffmaterial bestehender Dichtring 43 aufgenommen ist. Der Dichtring 43 sorgt für eine dynamische Abdichtung zwischen der Mantelfläche des ersten Zylinderabschnitts 41a des Antriebskolbens und der Innenfläche des Gehäusekorpus 30. An der dem ersten Arbeitsraum 35 abgewandten Stirnfläche des ersten Zylinderabschnitts 41a ist die erste Rückstellfeder 37a abgestützt, die sich andererseits am Gehäusedeckel 31 abstützt.

An den ersten Zylinderabschnitt 41a des Antriebskolbens schließt sich ein zweiter Zylinderabschnitt 41b an, der einen kleineren Außendurchmesser besitzt. An der dortigen, dem Arbeitsraum 35 abgewandten Stirnfläche ist die zweite Rückstellfeder 37b abgestützt, die sich andererseits ebenfalls am Gehäusedeckel 31 abstützt. Schließlich schließt sich in Axialrichtung an den zweiten Zylinderabschnitt 41b noch ein dritter Zylinderabschnitt 41c an, in dem die Durchgangsöffnung der Kolbenstange ausgebildet ist.

Die Kolbenstange ragt mit einem ersten Kolbenstangenabschnitt 44a in den zweiten Arbeitsraum 36 hinein, während ein zweiter Kolbenstangenabschnitt 44b den ersten Arbeitsraum 35 durchsetzt und über einen im Gehäuseboden 32 ausgebildeten zylindrischen Durchgangskanal 45 aus dem Antriebsgehäuse 29 herausgeführt ist. Der Gehäuseboden 32 besitzt ein Boden-Basisteil 46, das fluiddicht mit dem Gehäusekorpus 30 verbunden und beispielsweise dort angeschweißt ist. An das Boden-Basisteil 46 des Gehäusebodens 32 schließt sich diesseits ein erster Fortsatz 47 an, der in den ersten Arbeitsraum 35 hineinragt, wobei jenseits des Boden-Basisteils 46 ein zweiter zylindrischer Fortsatz 48 ausgebildet ist, der vom Antriebsgehäuse 29 nach unten abragt. Am Ventilgehäuse 12 befindet sich eine Ventilgehäuse-Schnittstelle 49, während am Antriebsgehäuse 29 eine Antriebsgehäuse-Schnittstelle 50 zur Kopplung von Ventilgehäuse 12 und Antriebsgehäuse 29 ausgebildet ist.

Die Antriebsgehäuse-Schnittstelle 50 ist an einem antriebsseitigen Schnittstellenteil 51 angeordnet, das bezüglich des Rests des Antriebsgehäuses 29 als separates Bauteil ausgebildet ist. Das antriebsseitige Schnittstellenteil 51 ist hülsenförmig ausgebildet und ist auf den zweiten zylindrischen Fortsatz 48 des Gehäusebodens 32 aufgesteckt und dort drehbar mit dem zweiten zylindrischen Fortsatz 48 verbunden, insbesondere mittels einer Sprengring-Verbindung. Das antriebsseitige Schnittstellenteil 51 ist mit einem fluidseitigen Schnittstellenteil 52 in Eingriff bringbar. Hierzu besitzt das antriebsseitige Schnittstellenteil 51 einen hohlzylindrischen Befestigungsabschnitt 53, an dessen Mantelfläche ein Außengewinde 54 ausgebildet ist. Alternativ ist es möglich, am Befestigungsabschnitt 53 ein Innengewinde auszubilden. An den Befestigungsabschnitt 53 schließt sich in Axialrichtung ein durchmessergrößerer Basisabschnitt 55 an.

Das fluidseitige Schnittstellenteil 52 ist hohlzylindrisch ausgebildet und besitzt mehrere Funktionsabschnitte. Einer dieser Funktionsabschnitte ist ein zylindrischer Fixierabschnitt, an dessen Mantelfläche ein Außengewinde 57 ausgebildet ist. Mit diesem Außengewinde 57 korrespondiert ein an einem Fixierstutzen 58 des Ventilgehäuses 12 ausgebildetes Innengewinde 60, wodurch das Schnittstellenteil 52 in das Ventilgehäuse 12 eingeschraubt werden kann. Der Fixierstutzen 58 ist einstückiger Bestandteil eines Ventilgehäuse-Basisteils 59. Das fluidseitige Schnittstellenteil 52 kann aufgrund der vorstehend erwähnten Verschraubung in einfacher Weise vom Ventilgehäuse-Basisteil 59 demontiert werden. Bei kleineren Nennweiten ist es möglich, dass Schnittstellenteil 52 und Ventilgehäuse 12 als einteiliges Bauteil ausgeführt sind, das beispielsweise aus Gussmaterial besteht.

Das fluidseitige Schnittstellenteil 52 besitzt ferner einen dem Befestigungsabschnitt 53 am antriebsseitigen Schnittstellenteil 51 zugeordneten Befestigungsbereich 61, an dessen Innenwandung ein Innengewinde 62 ausgebildet ist. Alternativ wäre es möglich, am Befestigungsbereich ein Außengewinde auszubilden. Die Stirnfläche des Befestigungsbereichs 61 bildet eine Gegen-Anschlagfläche 63, die der Anschlagfläche 56 am antriebsseitigen Schnittstellenteil 51 zugeordnet ist.

Das antriebsseitige Schnittstellenteil 51 und mit diesem das gesamte Antriebsgehäuse 29 lassen sich also in das fluidseitige Schnittstellenteil 52 einschrauben, wodurch Antriebsgehäuse 29 und Ventilgehäuse 12 miteinander gekoppelt sind.

Beim Einschrauben des antriebsseitigen Schnittstellenteils 51 wird eine Endstellung erreicht, die durch den Anschlag der beiden miteinander korrespondierenden Anschlagfläche 56 und Gegen-Anschlagfläche 63 definiert ist.

Es ist ferner eine weitere, innere Schnittstelle 64 vorgesehen, die zur Verbindung der Spindel mit der Kolbenstange dient.

Zum Ventil 11 gehört ferner eine von der Spindel 19 durchgriffene Dichtungseinrichtung 65, die eine mittels Federmitteln vorgespannte, unter Abdichtung an die Spindel 19 anliegende, Dichtungsmittel umfassende Dichtungsanordnung 66 aufweist. Die Dichtungseinrichtung 65 ist in einer vom Ventilgehäuse 12 gesonderten, als betriebsfertig vormontierte Baugruppe ausgebildeten Dichtungspatrone 67 aufgenommen. Die Dichtungspatrone besitzt ein am Ventilgehäuse 12 befestigbares oder befestigtes Patronengehäuse 68, in dem Federmittel zur Vorspannung der Dichtungsanordnung aufgenommen sind.

Das Patronengehäuse 68 besitzt mehrere Funktionsabschnitte. Es ist ein Aufnahmeabschnitt 69 zur Aufnahme der Dichtungsanordnung 66 und der Federmittel vorgesehen. Der Aufnahmeabschnitt 69 ist becherartig ausgestaltet und besitzt einen die Dichtungsanordnung 66 und die Federmittel umhüllenden Hüllbereich 70 und einen mit einem zentralen Durchgangsloch 71 versehenen Bodenbereich 72.

Die Dichtungsanordnung ist beispielhaft in Form eines Dachmanschettenpakets gezeigt, wobei mehrere in Axialrichtung aufeinandergestapelte ringförmige Dachmanschetten 73 als einzelne Dichtelemente vorgesehen sind.

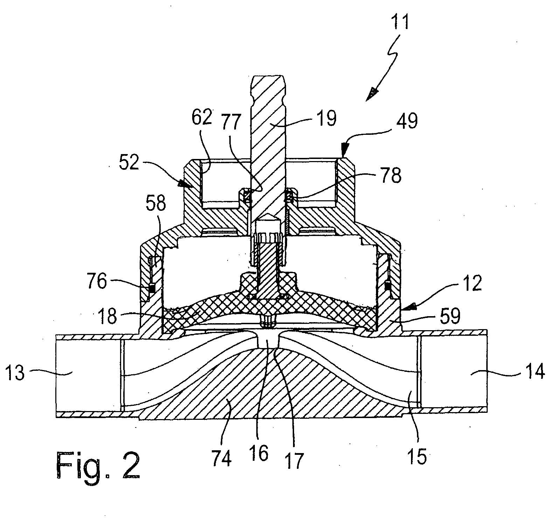

Figur 2 zeigt ein zweites Ausführungsbeispiel des erfindungsgemäßen Ventils 11. Im Gegensatz zum zuvor beschriebenen ersten Ausführungsbeispiel ist das Ventil 11 des zweiten Ausführungsbeispiels insgesamt als Membranventil ausgeführt. Es ist auch hier ein Ventilgehäuse 12 vorgesehen, das einen Eingang 13 und einen Ausgang 14 und den Eingang 13 und den Ausgang 14 miteinander verbindenden Durchströmungskanal 15 besitzt. Es ist ferner eine Durchströmöffnung 16 vorgesehen, die gegenüber dem Rest des Durchmessers des Durchströmungskanals 15 stark verjüngt ist. Die Durchströmöffnung 16 wird einerseits durch eine Erhöhung 74 begrenzt, an der sich ein Ventilsitz 17 für das Ventilglied 18 befindet. Das Ventilglied 18 ist als Membran ausgestaltet, die über Verbindungsmittel mit der Spindel 19 verbunden ist. Wie Figur 2 zeigt, besitzt der Fixierstutzen 58 ein Außengewinde, das mit dem fluidseitigen Schnittstellenteil 52 und einem dort angeordneten Innengewinde 62 verschraubbar ist. Zwischen dem Außengewinde am Fixierstutzen 58 und dem Innengewinde des fluidseitigen Schnittstellenteils 52 ist ferner noch eine ringförmige Dichtung 76 eingesetzt.

Das fluidseitige Schnittstellenteil 52 ist von einer Durchgangsöffnung 77 durchsetzt, durch die hindurch die Spindel 19 geführt ist. Der Spindeldurchgang wird durch ein ringförmiges Dichtelement 78 abgedichtet.

Somit ist auch dieses Membranventil wie das zuvor im ersten Ausführungsbeispiel beschriebene Schrägsitz-Ventil bei abgekoppeltem Antrieb fluiddicht verschlossen. Das Membranventil kann in dem in Figur 2 gezeigten Zustand in eine Prozessmediumleitung eingebaut werden, das heißt, es ist ein Einbau ohne Antrieb möglich.

## Patentansprüche

1. Ventil, mit einem von Prozessmedium durchströmbaren Ventilgehäuse (12), in dem ein eine Durchströmöffnung (16) umgebender Ventilsitz (17) angeordnet ist, dem ein an einer Spindel (19) angeordnetes Ventilglied (18) derart zugeordnet ist, dass das Ventilglied (18) mittels eines Stellhubs der Spindel (19) zwischen einer Absperrstellung, in der das Ventilglied (18) prozessmediumdicht dichtend am Ventilsitz (17) anliegt, und einer Offenstellung, in der das Ventilglied (18) vom Ventilsitz (17) abgehoben ist, bewegbar ist, wobei im Ventilgehäuse (12) eine von der Spindel (19) durchgriffene, den Spindeldurchgang abdichtende Dichtungseinrichtung (65) aufgenommen ist, und mit einem Ventilantrieb (28), der ein Antriebsgehäuse (29) und eine im Antriebsgehäuse (29) beweglich angeordnete, mittels Fluiddruck beaufschlagbare und den Stellhub der Spindel (9) erzeugende Arbeitswand (34) aufweist, und wobei am Ventilgehäuse (12) eine Ventilgehäuse-Schnittstelle (49) und am Antriebsgehäuse (29) eine Antriebsgehäuse-Schnittstelle (50) zur Kopplung von Ventilgehäuse (12) und Antriebsgehäuse (29) angeordnet sind, wobei das Antriebsgehäuse (29) einen der Arbeitswand (34) vorgelagerten, einen Arbeitsraum (35) für die Arbeitswand (34) begrenzenden Gehäuseboden (32) aufweist, an dem sich die Antriebsgehäuse-Schnittstelle (50) befindet, wobei der Gehäuseboden (32) ein mit dem Rest des Antriebsgehäuses (29) druckfest verbundenes und mit einer Innenwandung den Arbeitsraum (35) begrenzendes Boden-Basisteil (46) und ein mit dem Boden-Basisteil (46) gekoppeltes, die Antriebsgehäuse-Schnittstelle (50) aufweisendes antriebsseitiges Schnittstellenteil (51) aufweist, wobei das Ventilgehäuse (12) ein Ventilgehäuse-Basisteil (59) und ein mit dem Ventilgehäuse-Basisteil (59) gekoppeltes, die Ventilgehäuse-Schnittstelle (49) aufweisendes fluidseitiges Schnittstellenteil (52) aufweist, das als ein vom Ventilgehäuse-Basisteil (59) separates Bauteil ausgebildet und am Ventilgehäuse (12) befestigt ist, **dadurch gekennzeichnet**, das antriebsseitige Schnittstellenteil (51) als ein vom Boden-Basisteil (46) separates Bauteil ausgebildet und am Boden-Basisteil (46) befestigt ist.

2. Ventil nach Anspruch 1, **dadurch gekennzeichnet, dass** der Gehäuseboden (32) von einer mit der Arbeitswand (34) gekoppelten Arbeitsstange (38) durchsetzt ist und im Gehäuseboden (32) Dichtungsmittel zur Abdichtung der Arbeitsstange (38) aufgenommen sind.

3. Ventil nach einem der vorhergehenden Ansprüche, **dadurch gekennzeichnet, dass** die Dichtungseinrichtung (65) in einer vom Ventilgehäuse (12) gesonderten, als betriebsfertig vormontierte Baugruppe ausgebildeten und am Ventilgehäuse (12) befestigten Dichtungspatrone (67) aufgenommen ist.

4. Ventil nach Anspruch 3, **dadurch gekennzeichnet, dass** die Dichtungspatrone (67) ein Patronengehäuse (68) aufweist, in dem eine mittels Federmitteln federnd gegenüber dem Patronengehäuse (68) vorgespannte, unter Abdichtung an die Spindel (19) anliegende, Dichtungsmittel umfassende Dichtungsanordnung (66) aufgenommen ist.

5. Ventil nach einem der vorhergehenden Ansprüche, **dadurch gekennzeichnet, dass** Arbeitsstange (38) und Spindel (19) über eine weitere, innere Schnittstelle (64) miteinander koppelbar oder gekoppelt sind.

6. Ventil nach einem der vorhergehenden Ansprüche, **dadurch gekennzeichnet, dass** die Arbeitswand (34) als fluiddruckbeaufschlagbarer Arbeitskolben ausgebildet ist.

7. Ventil nach einem der vorhergehenden Ansprüche, **dadurch gekennzeichnet, dass** der Arbeitsraum (35) als fluiddruckbeaufschlagbare Arbeitskammer ausgebildet ist.

8. Ventil nach einem der vorhergehenden Ansprüche, **gekennzeichnet durch** ein an der Ventilgehäuse-Schnittstelle (49) mit dem Ventilgehäuse (12) anstelle des Antriebsgehäuses (29) koppelbares Aufsatzteil, das das Ventilglied (18) im aufgesetzten Zustand in dessen Absperrstellung drückt.

## Claims

1. Valve with a valve housing (12) through which process medium may flow and in which is located a valve seat (17) encompassing a through-flow orifice (16) and assigned a valve member (18) mounted on a spindle (19) in such a way that the valve member (18) is movable by means of a stroke of the spindle (19) between a blocking position in which the valve member (18) fits up with process-medium-tight sealing against the valve seat (17), and an open position in which the valve member (18) is lifted from the valve seat (17), wherein there is accommodated in the valve housing (12) a sealing device (65) through which the spindle (19) passes and which seals the spindle passage, and with a valve drive (28) which has a drive housing (29) and an operating wall (34) arranged movably in the drive housing (29), which may be subjected to fluid pressure and generates the stroke of the spindle (19), and wherein there are provided on the valve housing (12) a valve housing interface (49) and on the drive housing (29) a drive housing interface (50) for the connection of valve housing (12) and drive housing (29), wherein the drive housing (29) has, in front of the operating wall (34), a housing base (32) bounding a working space (35) for the operating wall (34), on which the drive housing interface (50) is provided, wherein the housing base (32) has a bottom base part (46) connected, pressure-tight, to the rest of the drive housing (29) and with an inner wall bounding the working space (35), and a drive-side interface part (51) having the drive housing interface (50) and connected to the bottom base part (46), wherein the valve housing (12) has a valve housing base section (59), and a fluid-side interface part (52) having the valve housing interface (49) and connected to the valve housing base section (59) being designed as a separate component from the valve housing base section (59) and attached to the valve housing (12), **characterised in that** the drive-side interface part (51) is designed as a separate component from the bottom base part (46), and is attached to the bottom base part (46).

2. Valve according to claim 1, **characterised in that** an operating rod (38) connected to the operating wall (34) passes through the housing base (32), and sealing means to seal the operating rod (38) are accommodated in the housing base (32).

3. Valve available any of the preceding claims, **characterised in that** the sealing device (65) is accommodated in a sealing cartridge (67), separate from the valve housing (12), designed as a ready for use pre-assembled module and attached to the valve housing (12).

4. Valve according to claim 3, **characterised in that** the sealing cartridge (67) has a cartridge housing (68), in which is accommodated a seal assembly (66) including sealing means, biased by spring means against the cartridge housing (68) and fitting up against the spindle (19) with sealing.

5. Valve according to any of the preceding claims, **characterised in that** the operating rod (38) and the spindle (19) are or may be connected to one another over a further inner interface (64).

6. Valve according to any of the preceding claims, **characterised in that** the operating wall (34) is in the form of an operating piston to which fluid pressure may be applied.

7. Valve according to any of the preceding claims, **characterised in that** the working space (35) is in the form of a working chamber which may be subjected to fluid pressure.

8. Valve according to any of the preceding claims, **characterised by** an attachment part, which may be connected at the valve housing interface (49) with the valve housing (12) instead of the drive housing (29), and in the attached state presses the valve member (18) into its blocking position.

## Revendications

1. Soupape avec un boîtier de soupape (12) pouvant être traversé par un agent de processus, dans lequel un siège de soupape (17) entourant une ouverture de passage (16) est agencé, auquel est agencé un organe de soupape (18) agencé sur une broche (19) de telle manière que l'organe de soupape (18) soit mobile à l'aide d'une course de réglage de la broche (19) entre une position de blocage, dans laquelle l'organe de soupape (18) repose de manière étanche à l'agent de processus contre le siège de soupape (17), et une position ouverte, dans laquelle l'organe de soupape (18) est relevé du siège de soupape (17), dans laquelle dans le boîtier de soupape (12) est reçu un dispositif d'étanchéité (65) rendant étanche le passage de broche, traversé par la broche (19), et avec un entraînement de soupape (28), qui présente un boîtier d'entraînement (29) et une paroi de travail (34) générant la course de réglage de la broche (9) et pouvant être sollicitée à l'aide de la pression de fluide, agencée de manière mobile dans le boîtier d'entraînement (29), et dans laquelle sur le boîtier de soupape (12) sont disposées une interface de boîtier de soupape (49) et sur le boîtier d'entraînement (29) une interface de boîtier d'entraînement (50) pour le couplage de boîtier de soupape (12) et du boîtier d'entraînement (29), dans laquelle le boîtier d'entraînement (29) présente un fond de boîtier (32) logé en amont de la paroi de travail (34), délimitant un espace de travail (35) pour la paroi de travail (34), sur lequel l'interface de boîtier d'entraînement (50) se trouve, dans laquelle le fond de boîtier (32) présente une partie de base de fond (46) relié de manière résistante à la pression au reste du boîtier d'entraînement (29) et délimitant avec une paroi intérieure l'espace de travail (35) et une partie d'interface (51) côté entraînement présentant l'interface de boîtier d'entraînement (50), couplée à la partie de base de fond (46), dans laquelle le boîtier de soupape (12) présente une partie de base de boîtier de soupape (59) et une partie d'interface (52) côté fluide présentant l'interface de boîtier de soupape (49), couplée à la partie de base de boîtier de soupape (59), qui est réalisée comme un composant séparé de la partie de base de boîtier de soupape (59) et est fixée sur le boîtier de soupape (12), **caractérisée en ce que** la partie d'interface (51) côté entraînement est réalisée comme un composant séparé par la partie de base de fond (46) et est fixée sur la partie de base de fond (46).

2. Soupape selon la revendication 1, **caractérisée en ce que** le fond de boîtier (32) est traversé par une tige de travail (38) couplée à la paroi de travail (34) et dans le fond de boîtier (32), des moyens d'étanchéité sont reçus pour rendre étanche la tige de travail (38).

3. Soupape selon l'une quelconque des revendications précédentes, **caractérisée en ce que** le dispositif d'étanchéité (65) est reçu dans une cartouche d'étanchéité (67) séparée du boîtier de soupape (12), réalisée comme un bloc prémonté prêt à l'emploi et fixée sur le boîtier de soupape (12).

4. Soupape selon la revendication 3, **caractérisée en ce que** la cartouche d'étanchéité (67) présente un boîtier de cartouche (68), dans lequel est reçu un agencement d'étanchéité (66) comportant des moyens d'étanchéité, reposant par étanchéité contre la broche (19), précontraints à l'aide de moyens de ressort élastiquement par rapport au boîtier de cartouche (68).

5. Soupape selon l'une quelconque des revendications précédentes, **caractérisée en ce que** la tige de travail (38) et la broche (19) sont ou peuvent être couplées l'une à l'autre par une autre interface intérieure (64).

6. Soupape selon l'une quelconque des revendications précédentes, **caractérisée en ce que** la paroi de travail (34) est réalisée comme un piston de travail pouvant être sollicité par pression fluidique.

7. Soupape selon l'une quelconque des revendications précédentes, **caractérisée en ce que** l'espace de travail (35) est réalisé comme une chambre de travail pouvant être sollicitée par pression fluidique.

8. Soupape selon l'une quelconque des revendications précédentes, **caractérisée par** une partie rapportée pouvant être couplée sur l'interface de boîtier de soupape (49) au boîtier de soupape (12) à la place du boîtier d'entraînement (29), qui presse l'organe de soupape (18) dans l'état rapporté dans sa position de blocage.
